# EUROPÄISCHE PATENTSCHRIFT

(11) **EP 1 444 746 B1**
(45) Veröffentlichungstag und Bekanntmachung des Hinweises auf die Patenterteilung: **22.06.2005**
(21) Anmeldenummer: 02794518.7
(22) Anmeldetag: 25.07.2002
(51) Int. Cl.: H01M 8/04

(54) **VERFAHREN ZUM LOKALISIEREN EINES GASLECKS INNERHALB EINER BRENNSTOFFZELLENANORDNUNG**
METHOD FOR LOCALISING A GAS LEAK IN A FUEL CELL SYSTEM
PROCEDE PERMETTANT DE LOCALISER UNE FUITE DE GAZ DANS UN SYSTEME DE CELLULES ELECTROCHIMIQUES

(30) Priorität: 01.08.2001 EP 01118555
(43) Veröffentlichungstag der Anmeldung: 11.08.2004
(73) Patentinhaber: Siemens Aktiengesellschaft, 80333 München (DE)
(72) Erfinder: STÜHLER, Walter, 96114 Hirschaid (DE)
(86) Internationale Anmeldenummer: PCT/EP2002/008307
(87) Internationale Veröffentlichungsnummer: WO 2003/015201

(56) Entgegenhaltungen:
- WO-A-91/19328
- WO-A-98/24137
- DE-C- 19 645 990
- DE-C- 19 649 434
- PATENT ABSTRACTS OF JAPAN vol. 015, no. 254 (E-1083), 27. Juni 1991 (1991-06-27) -& JP 03 081970 A (FUJI ELECTRIC CO LTD), 8. April 1991 (1991-04-08)
- PATENT ABSTRACTS OF JAPAN vol. 1997, no. 05, 30. Mai 1997 (1997-05-30) -& JP 09 027336 A (TOSHIBA CORP), 28. Januar 1997 (1997-01-28)

## Beschreibung

Die Erfindung bezieht sich auf ein Verfahren zum Lokalisieren eines Gaslecks innerhalb einer Brennstoffzellenanordnung mit einer Anzahl von Brennstoffzellen.

In einer Brennstoffzelle wird durch die elektrochemische Verbindung von Wasserstoff (H₂) und Sauerstoff (O₂) an einem Elektrolyten zu Wasser (H₂O) elektrischer Strom mit hohem Wirkungsgrad erzeugt und dies auch ohne Emission von Schadstoffen und Kohlendioxid (CO₂) wenn als Brenngas reiner Wasserstoff eingesetzt wird. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal etwa 1,1 V. Daher wird eine Vielzahl von Brennstoffzellen zu einer Brennstoffzellenanordnung zusammengeschlossen, bei röhrenförmigen Brennstoffzellen beispielsweise zu einem Röhrenbündel oder bei planaren Brennstoffzellen zu einem Stapel, der Bestandteil eines Brennstoffzellenblocks ist. Durch das In-Reihe-Schalten der Brennstoffzellen der Anordnung kann die Betriebsspannung der Brennstoffzellenanordnung 100 V und mehr betragen.

Eine Brennstoffzelle weist einen Elektrolyten auf, der - je nach technischer Ausführung - entweder für Wasserstoff- oder für Sauerstoffionen durchlässig ist. An eine Seite des Elektrolyten grenzt eine Anode und an diese wiederum ein Anodengasraum an. An die andere Seite des Elektrolyten grenzt die Kathode der Brennstoffzelle an, der der Kathodengasraum der Brennstoffzelle benachbart ist. Durch eine Verbundleiterplatte, die die Anode einer ersten Brennstoffzelle mit der Kathode einer dieser ersten Brennstoffzelle benachbarten Brennstoffzelle elektrisch verbindet - oder eine anders geartete elektrische Verbindung durch einen sogenannten Interconnector - wird ein In-Reihe-Schalten mehrerer Brennstoffzellen ermöglicht.

Während des Betriebs werden einer Brennstoffzelle ein wasserstoffhaltiges Gas - im Folgenden Brenngas genannt - und ein sauerstoffhaltiges Gas - im Folgenden Oxidationsgas genannt - zugeführt. Diese beiden Gase werden im Folgenden als Betriebsgase bezeichnet. Als Brenngas findet beispielsweise Methan, Erdgas, Kohlegas oder auch reiner Wasserstoff (H₂) Verwendung. Als Oxidationsgas wird in der Regel Luft, aber auch reiner Sauerstoff (O₂) verwendet. Zum Betrieb der Brennstoffzelle wird das Brenngas in den Anodengasraum der Brennstoffzelle geführt, von wo es durch die gasdurchlässige Anode zum Elektrolyten gelangt. Das Oxidationsgas wird in den Kathodengasraum der Brennstoffzelle geleitet und dringt von dort durch die ebenfalls gasdurchlässige Kathode auch zum Elektrolyten vor. Je nach Durchlässigkeit des Elektrolyten für Sauerstoff- oder Wasserstoffionen werden die Sauerstoffionen aus dem Oxidationsgas und die Wasserstoffionen aus dem Brenngas an der einen oder anderen Seite des Elektrolyten zusammengeführt, wodurch dann durch die elektrochemische Verbindung von Wasserstoff und Sauerstoff zu Wasser Strom und auch Wärme erzeugt wird.

Bei einem Leck innerhalb der Brennstoffzelle, beispielsweise in der aus der Kathode, dem Elektrolyten und der Anode bestehenden Elektrolyt-Elektroden-Einheit, tritt während des Betriebs der Brennstoffzelle Brenngas aus dem Anodengasraum in den Kathodengasraum über oder umgekehrt. Dort reagieren der Wasserstoff und der Sauerstoff zu Wasser, wobei lediglich Wärme, jedoch kein Strom erzeugt wird. Die an der Stelle des Gaslecks entstehende Wärme kann die Elektrolyt-Elektroden-Einheit um die Stelle des Lecks herum zerstören. Bei der Verwendung eines Brenngases mit einem hohen Wasserstoffanteil, speziell bei der Verwendung von reinem Wasserstoff in Verbindung mit der Verwendung eines Oxidationsgases mit einem hohen Sauerstoffanteil, speziell bei der Verwendung von reinem Sauerstoff, ist die Wärmeentwicklung um das Gasleck herum so groß, dass die Elektrolyt-Elektroden-Einheit in dem Maße zerstört wird, dass sich das Gasleck ausweitet und noch mehr Gas unkontrolliert durch das Leck strömt. Durch diese sich selbst steigernde Reaktion brennt die Brennstoffzelle innerhalb kürzester Zeit ab wobei das Feuer auch die benachbarten Brennstoffzellen oder sogar die gesamte Anordnung völlig zerstören kann. Im schlimmsten Fall besteht sogar Explosionsgefahr mit weitreichenden Folgen für die der Brennstoffzellenanordnung benachbarte Umgebung.

Zur Erkennung eines Gaslecks innerhalb einer Brennstoffzellenanordnung ist ein Lecktestverfahren bekannt, bei dem einer der beiden Gasräume der Brennstoffzellen der Brennstoffzellenanordnung mit einem Inertgas beaufschlagt wird. Anschließend werden diese Gasräume von der Umgebung abgeschlossen und der Inertgasdruck innerhalb dieser Gasräume wird beobachtet. Ein zeitliches Absinken des Gasdrucks ist ein Hinweis auf ein Leck innerhalb dieser Gasräume der Brennstoffzellen. Mit diesem Verfahren lässt sich jedoch nur ein grobes Gasleck innerhalb einer Brennstoffzelle finden, wobei sich auch kleinere Gaslecks im Betrieb der Brennstoffzelle schnell ausweiten können. Außerdem gibt dieses Verfahren nur einen Hinweis darauf, dass innerhalb der Brennstoffzellenanordnung ein Gasleck existiert, nicht jedoch darauf, welche der Brennstoffzellen innerhalb der Brennstoffzellenanordnung schadhaft ist.

DE-19649434 betrifft ein Verfahren zur Ermittlung von Gaslecks zwischen dem Anoden- und Kathodengasraum von PEM-Brennstoffzellen, dadurch gekennzeichnet, daß in den beiden Gasräumen ein unterschiedlicher Wasserstoffpartialdruck eingestellt wird, und daß der zeitliche Verlauf der Zellspannung gemessen wird.

JP-03081970 betrifft ein Verfahren zur Abschaltung einer Brennstoffzelle, bei dem die Oxidationsgaszufuhr unterbrochen wird und der Kathodengasraum mit Stickstoff gespült wird. Die Brenngaszufuhr wird dann unterbrochen und die Brennstoffzelle wird mit einem Entladewiderstand in Kontakt gebracht. Der Zellstrom der Brennstoffzelle kann überwacht werden. Wenn der Strom auf 0 kommt, wird der Anodegasraum mit Stickstoff gespült.

WO-9824137 betrifft ein Verfahren zum Erkennen eines Gaslecks zwischen dem Anoden- und dem Kathodengasraum einer PEM-Brennstoffzelle, wobei eine Zellspannung erfaßt wird und in einem ersten Zeitabschnitt der Anoden- und der Kathodengasraum mit Stickstoff gespült, in einem zweiten Zeitabschnitt der Kathodengasraum mit Sauerstoff und in einem dritten Zeitabschnitt der Anodengasraum mit Wasserstoff gespeist werden und anschließend das Absinken der Zellspannung in Abhängigkeit von der Zeit unter einen Grenzwert gemessen und ausgewertet wird.

DE-19645990 betrifft ein Verfahren zum Erkennen eines Lecks einer in Betrieb befindlichen Hochtemperatur-Brennstoffzelle, wobei der Feuchtigkeitsgrad eines Betriebsmittels für die Hochtemperatur-Brennstoffzelle an einem Ausgang der Hochtemperatur-Brennstoffzelle erfaßt wird.

JP-09027336 betrifft ein Verfahren zum Erkennen eines Gaslecks einer Brennstoffzelle. Brenngas und Oxidationsgas werden einer Brennstoffzelle zugeführt. Das Verhältnis zwischen Oxidationsgaszufuhr und Spannung wird beobachtet. Ein Gasleck ist erkennbar, wenn die Spannungsänderung im Verhältnis zu einer Änderung des Oxidationsgaszufuhr stark ist. Die Größe des Wasserstofflecks kann berechnet werden. Wenn die Größe des Wasserstofflecks größer im Normalbetrieb ist kann mann davon ausgehen, daß es einen Gaskurzschluß in der Brennstoffzelle gibt.

WO-9119328 betrifft ein Verfahren zur Beobachtung der Leistung einer Zellenanordnung. Die Spannung einer Gruppe von Zellen wird mit einer Referenzspannung verglichen. Wenn die Spannung außerhalb eines Grenzwertes abhängig von der Referenzspannung liegt, wird ein Alarmsignal ausgelöst und die Brenngaszufuhr unterbrochen.

Es ist die Aufgabe der vorliegenden Erfindung, ein Verfahren anzugeben, mit dem auch eine kleine Undichtigkeit in der Elektrolyt-Elektroden-Einheit einer Brennstoffzelle innerhalb einer Brennstoffzellenanordnung gefunden werden kann.

Diese Aufgabe wird durch ein Verfahren zum Lokalisieren eines Gaslecks innerhalb einer Brennstoffzellenanordnung mit einer Anzahl von Brennstoffzellen gelöst, bei dem erfindungsgemäß
a) der Anodengasraum der Brennstoffzellen mit Brenngas und der Kathodengasraum der Brennstoffzellen mit Oxidationsgas beaufschlagt wird,
b) die Betriebsgaszufuhr zu mindestens einem der beiden Gasräume der Brennstoffzellen unterbrochen wird,
c) der von der Betriebsgaszufuhr getrennte Gasraum der Brennstoffzellen mit einem Inertgas gespült wird,
d) die Brennstoffzellen mit einem Entladewiderstand in elektrischem Kontakt stehen,
e) die Zellspannung der Brennstoffzellen überwacht wird.

Dieses Verfahren ist nicht nur geeignet zum Lokalisieren eines schon vorbekannten Gaslecks innerhalb einer Brennstoffzellenanordnung, sondern auch zum erstmaligen Erkennen des Gaslecks.

Die einzelnen Schritte des Verfahrens müssen nicht unbedingt in der durch die oben angegebenen Buchstaben vorgegebenen Reihenfolge durchgeführt werden. Bei der Unterbrechung der Betriebsgaszufuhr zu mindestens einem der beiden Gasräume der Brennstoffzellen kann entweder die Brenngaszufuhr zu den Anodengasräumen der Brennstoffzellen oder die Oxidationsgaszufuhr zu den Kathodengasräumen der Brennstoffzellen oder aber auch die Zufuhr von beiden Betriebsgasen zu den Brennstoffzellen unterbrochen werden. Der Entladewiderstand kann schon vor Beginn des erfindungsgemäßen Verfahrens an die Brennstoffzellen angeschaltet sein und während der Durchführung des Verfahrens in elektrischem Kontakt mit den Brennstoffzellen bleiben. Eine Undichtigkeit ist jedoch leichter zu erkennen, wenn die Kontaktierung der Brennstoffzellen mit dem Entladewiderstand erst nach Beginn der Spülung der Brennstoffzellen mit dem Inertgas vorgenommen wird.

Als Entladewiderstand kann jeder Widerstand dienen, der die Brennstoffzellen in quantitativ nachvollziehbarer Weise und in geeigneter Geschwindigkeit entlädt. Es kann somit ein spezieller, nur für die Entladung gedachter Entladewiderstand verwendet werden, oder aber auch eine Betriebslast, die während des Betriebs der Brennstoffzellenanordnung mit Strom versorgt wird.

Bei der Spülung des von der Betriebsgaszufuhr getrennten Gasraums der Brennstoffzellen mit einem Inertgas wird das in diesen Gasräumen zuerst noch vorhandene Betriebsgas zu weiten Teilen aus dem Gasraum herausgespült. Es verbleibt jedoch noch eine gewisse Menge Betriebsgas in der gasdurchlässigen Elektrode und u.U. auch noch in den Toträumen des Gasraums und auch beispielsweise noch in einem an den Gasraum angeschlossenen Wasserabscheider. Dieses Restbetriebsgas im gespülten Gasraum wird bei Kontakt der Brennstoffzelle mit dem Entladewiderstand in einer stromerzeugenden elektrochemischen Reaktion im Laufe einer gewissen Zeitspanne verbraucht. Die Länge der Zeitspanne hängt ab von der Menge des im gespülten Gasraum verbliebenen Restbetriebsgases und dem elektrischen Widerstand des Entladewiderstands. Bei einem Leck innerhalb der Elektrolyt-Elektroden-Einheit einer Brennstoffzelle strömt - je nach Druckverhältnissen innerhalb der Brennstoffzelle - entweder Inertgas in den ungespülten Gasraum der defekten Brennstoffzelle oder Betriebsgas aus dem ungespülten Gasraum der defekten Brennstoffzelle in den vom Inertgas durchspülten Gasraum der Brennstoffzelle. In dem Fall, in dem das Inertgas in den ungespülten Gasraum der defekten Brennstoffzelle strömt, verdrängt es dort das Betriebsgas aus der an diesen Gasraum angrenzenden Elektrode. Hierdurch wird die stromerzeugende elektrochemische Reaktion innerhalb der Brennstoffzelle bei Kontakt der Brennstoffzelle mit dem Entladewiderstand herabgesetzt, so dass die defekte Brennstoffzelle selber weniger Strom erzeugen kann. Bei einem Übertritt des Betriebsgases aus dem ungespülten Gasraum der Brennstoffzelle in den vom Inertgas durchspülten Brenngasraum der Brennstoffzelle geht dieses Betriebsgas mit dem Restbetriebsgas aus dem durchspülten Gasraum eine lediglich Wärme erzeugende chemische Reaktion ein. Hierdurch steht ein Teil des Restbetriebsgases aus dem vom Inertgas durchspülten Gasraum der defekten Brennstoffzelle nicht mehr für die elektrochemische Reaktion der Brennstoffzelle zur Verfügung, wodurch auch in diesem Falle die elektrochemische Reaktion nur in vermindertem Maße stattfinden kann und die defekte Brennstoffzelle bei Kontakt mit dem Entladewiderstand nur weniger Strom produzieren kann als die benachbarten intakten Brennstoffzellen der Brennstoffzellenanordnung.

Während des Verbrauchs der Betriebsgase in den in Reihe geschalteten Brennstoffzellen der Brennstoffzellenanordnung trägt jede der Brennstoffzellen der Anordnung mit dem von ihr produzierten Strom zum Gesamtstrom der Brennstoffzellenanordnung bei. Dieser Gesamtstrom der Brennstoffzellenanordnung durchläuft jede Brennstoffzelle der Anordnung gleichermaßen. Erzeugt nun eine der Brennstoffzellen weniger Strom, beispielsweise wegen eines Defekts dieser Brennstoffzelle, als die anderen Brennstoffzellen der Anordnung, so wird durch die In-Reihe-Schaltung der Brennstoffzellen bewirkt, dass diese Brennstoffzelle eine geringere Ausgangsspannung aufweist als die anderen Brennstoffzellen der Anordnung. Während des Verbrauchs des Restbetriebsgases im vom Inertgas durchspülten Gasraum der Brennstoffzellen sinkt nun die Spannung aller Brennstoffzellen der Brennstoffzellenanordnung im Laufe der Zeit ab, und zwar in dem Maße, wie das Restbetriebsgas in der Anordnung verbraucht wird. Die Ausgangsspannung einer defekten Brennstoffzelle wird hierbei schneller absinken als die Ausgangsspannungen der intakten Brennstoffzellen der Anordnung. Dadurch, dass durch die defekte Brennstoffzelle der gleiche Strom fließt wie durch die intakten Brennstoffzellen wird die Ausgangsspannung der defekten Brennstoffzelle nach einer gewissen Zeit auf 0 V und dann auch darunter gedrückt: Die Ausgangsspannung der defekten Brennstoffzelle polt um. Eine defekte Brennstoffzelle ist somit über einen gewissen Zeitraum während der Entladung der Brennstoffzellen der Brennstoffzellenanordnung durch ihre negative Ausgangsspannung erkennbar. Durch die Überwachung der Zellspannung der Brennstoffzellen ist somit eindeutig feststellbar, innerhalb welcher der Brennstoffzellen der Brennstoffzellenanordnung eine Undichtigkeit - beispielsweise in der Elektrolyt-Elektroden-Einheit ist. In gewissem Umfang kann sogar aus der Größe der negativen Ausgangsspannung der defekten Brennstoffzelle auf die Größe der Undichtigkeit geschlossen werden.

Die Zellspannungsüberwachung sollte gemäß der gewünschten Genauigkeit der Lokalisierung des Gaslecks erfolgen. Bei einer Überwachung jeder einzelnen Brennstoffzelle der Brennstoffzellenanordnung ist eine genaue Lokalisierung der defekten Brennstoffzelle möglich. Versuche haben jedoch gezeigt, dass eine gefahrenträchtige Undichtigkeit innerhalb einer Brennstoffzelle zu einer so starken Umpolung der Ausgangsspannung der Brennstoffzelle führt, dass auch bei einer gröberen Überwachung das Leck erkannt und eingegrenzt werden kann.

Zweckmäßigerweise werden die Brennstoffzellen vor der Unterbrechung der Betriebsgaszufuhr zu einem der beiden Gasräume der Brennstoffzellen in den Leerlaufbetrieb gebracht. Der Entladewiderstand wird dann während der Durchführung des Verfahrens, am zweckmäßigsten während der Spülung des von der Betriebsgaszufuhr getrennten Gasraums der Brennstoffzellen mit Inertgas, an die Brennstoffzellen angeschaltet. Als Leerlaufbetrieb wird der Zustand der Brennstoffzellen bezeichnet, in dem sie von einem Entladewiderstand oder einer Betriebslast abgekoppelt sind. Während des Leerlaufbetriebs fließt somit im wesentlichen kein Strom durch die Brennstoffzellenanordnung. Sind die Brennstoffzellen zu Beginn der Spülung mit einem Inertgas in Leerlaufbetrieb, so kann das Inertgas oder eines der Betriebsgase durch die Undichtigkeit in der Brennstoffzelle hindurchtreten und sich im anderen Gasraum ausbreiten, bevor die Zellspannung der defekten Brennstoffzelle durch die Entladung durch den Entladewiderstand bereits sinkt. Es wird dem übertretenden Gas somit mehr Zeit gegeben, sich auszubreiten. Hierdurch sinkt die Zellspannung der defekten Brennstoffzelle während der Entladung der Brennstoffzellenanordnung schneller und die Undichtigkeit kann leichter erkannt und lokalisiert werden.

Vorteilhafterweise wird das Verfahren nach einem regulären Betrieb der Brennstoffzellenanordnung durchgeführt. Der erste Schritt des Verfahrens, nämlich die Beaufschlagung des Anodengasraums mit Brenngas und des Kathodengasraums mit Oxidationsgas geschieht dann schon im regulären Betrieb der Brennstoffzellenanordnung. Das Verfahren kann somit sehr leicht und ohne Zustandsänderung der Brennstoffzellenanordnung aus dem laufenden regulären Betrieb heraus gestartet werden. Es ist auch möglich, das Verfahren während des regulären Betriebs durchzuführen, wobei dann der reguläre Betrieb der Brennstoffzellenanordnung während des Absinkens der Spannung der Anordnung während des Verfahrens unterbrochen wird.

Mit besonders wenig Aufwand wird das Verfahren als Abschaltverfahren für die Brennstoffzellenanordnung durchgeführt. Bei dieser Ausgestaltung der Erfindung bedeutet die Durchführung des Verfahrens gegenüber dem regulären Abschalten der Anordnung kaum zusätzlichen Aufwand, da schon zum Abschalten die Betriebsgaszufuhr zu den Brennstoffzellen unterbrochen wird und die Brennstoffzellen in der Regel mit einem Inertgas gespült und durch einen Entladewiderstand entladen werden.

Zweckmäßigerweise wird das Verfahren mit dem Fluten aller Gasräume der Brennstoffzellen mit einem Inertgas abgeschlossen. Hierdurch werden die Brennstoffzellen in einen sicheren Ruhezustand gebracht.

In einer vorteilhaften Ausgestaltung der Erfindung wird als Inertgas Stickstoff (N₂) verwendet. Stickstoff ist besonders preiswert und führt zu keiner Schädigung der Materialien innerhalb einer Brennstoffzelle.

In einer weiteren vorteilhaften Ausgestaltung des Verfahrens wird der Gasdruck innerhalb der beiden Gasräume der Brennstoffzellen vor dem Spülen mit dem Inertgas auf einen vorbestimmten Wert gebracht. Brennstoffzellen werden mit einem relativ hohen Betriebsgasdruck betrieben, beispielsweise zwischen 2 und 3 Bar (absoluter Druck). Zur Durchführung des erfindungsgemäßen Verfahrens ist ein so hoher Betriebsgasdruck nicht erforderlich. Deshalb können die Gasräume der Brennstoffzellen vor dem Spülen mit dem Inertgas beispielsweise druckentlastet werden. Das Einstellen der Betriebsgasdrücke in den Gasräumen auf einen vorbestimmten Wert bringt außerdem den Vorteil, dass das Verfahren unabhängig von einem eventuell schwankenden Betriebsgasdruck bei bekannten Drücken durchgeführt werden kann, für die Erfahrungswerte vorliegen. Dies erleichtert die Abschätzung der Größe einer eventuell vorliegenden Undichtigkeit.

Ein weiterer Vorteil der Erfindung wird erreicht, wenn der Inertgasdruck größer als der Druck des Betriebsgases in den ungespülten Gasräumen der Brennstoffzellen ist. Bei einer Undichtigkeit tritt dann das Inertgas in den jeweils anderen Gasraum der Brennstoffzelle über und verdrängt das dort vorherrschende Betriebsgas teilweise aus den Poren der dortigen Elektrode. Hierdurch wird ein besonders reproduzierbares Verfahren ohne unkontrollierte chemische Reaktionen erreicht. Außerdem wird erreicht, dass bei einer Spülung der anodenseitigen Gasräume der Brennstoffzellen mit Inertgas kein Sauerstoff in diese Gasräume übertritt. Hierdurch wird eine Oxidation dieser Gasräume wirksam vermieden.

In einer alternativen Ausgestaltung des Verfahrens wird der Inertgasdruck kleiner gewählt als der Druck des Betriebsgases in den ungespülten Gasräumen der Brennstoffzelle. Durch das Verbrauchen des Restbetriebsgases in der gespülten Seite der Brennstoffzelle durch das Übertretende andere Betriebsgas kann bei dieser Ausgestaltung der Erfindung ein schnelleres Absinken der Zellspannung der defekten Zelle und damit im weiteren Verlauf des Verfahrens eine besonders ausgeprägte negative Zellspannung erreicht werden. Dies erleichtert das Erkennen und Lokalisieren einer besonders kleinen Undichtigkeit.

Vorteilhafterweise werden die Kathodengasräume der Brennstoffzellen mit dem Inertgas gespült. Hierdurch wird erreicht, dass bei der Durchführung des Verfahrens im wesentlichen der gesamte Sauerstoff in den Brennstoffzellen verbraucht wird. Dies ist besonders günstig, wenn die Brennstoffzellenanordnung nach der Durchführung des Verfahrens für eine Weile stillgelegt wird. Im stillgelegten Zustand sollte möglichst kein Restsauerstoff in den Brennstoffzellen verbleiben, damit keine Schädigung durch Oxidation in den Brennstoffzellen auftritt.

Zweckmäßigerweise wird der von der Betriebsgaszufuhr getrennte Gasraum eine vorbestimmte erste Zeitperiode mit dem Inertgas gespült und der Entladewiderstand wird erst mit Ablauf der Zeitperiode zugeschaltet. Nach Ablauf der Zeitperiode können die Brennstoffzellen auch weiter gespült werden. Das durch eine Undichtigkeit innerhalb der Brennstoffzelle hindurchtretende Inert- oder Betriebsgas benötigt eine Weile, um in dem Gasraum, in den es eingetreten ist, das andere Betriebsgas zu verbrauchen bzw. das Inertgas zu verdrängen. Durch die Wahl einer bestimmten Zeitperiode kann das Verfahren reproduzierbar durchgeführt werden, was sich vorteilhaft bei einer Wiederholung des Verfahrens, beispielsweise bei Unsicherheiten, auswirkt, da die beiden durchgeführten Verfahren vergleichbar sind. Außerdem lassen sich durch eine vorbestimmte Zeitperiode Erfahrungen bei der Auswertung der Verfahrensergebnisse gewinnen. Außerdem wird durch die Zuschaltung des Entladewiderstands erst mit Ablauf der Zeitperiode erreicht, dass sich der Verbrauch oder die Verdrängung der Gase in einer schadhaften Brennstoffzelle so signifikant ausprägen kann, dass eine gefahrenträchtige und Störungen hervorrufende Undichtigkeit in der Brennstoffzelle zuverlässig erkannt wird.

Zweckmäßigerweise wird die Zeitperiode zwischen 10 Sekunden und 5 Minuten gewählt. Wird das Verfahren während des Betriebs der Brennstoffzellenanlage durchgeführt und sollen nur größere Undichtigkeiten erkannt und lokalisiert werden, so ist eine kurze Zeitspanne genügend. Zum Erkennen kleinerer Undichtigkeiten muss eine größere Zeitspanne gewählt werden. Als besonders vorteilhaft hat sich in einer Reihe von Versuchen die Wahl der Zeitspanne zwischen 60 und 120 Sekunden erwiesen. In dieser Zeit kann das übertretende Gas sich genügend im anderen Gasraum ausbreiten und es verbleibt dennoch genügend Restbetriebsgas in den gespülten Gasräumen der Brennstoffzellen.

In einem alternativen Verfahren wird der Entladewiderstand erst dann zugeschaltet, wenn die Spannung der Brennstoffzellenanordnung auf einen vorbestimmten Wert gefallen ist. Beim Spülen des von der Betriebsgaszufuhr getrennten Gasraums der Brennstoffzellen verdrängt das Inertgas einen Teil des Betriebsgases aus der gasdurchlässigen Elektrode dieses Gasraums. Dies führt zu einem langsamen Sinken der Zellspannung der Brennstoffzellen auch bei nicht zugeschaltetem Entladewiderstand. Dieses Sinken der Zellspannung kann auch als reproduzierbares Maß der Ausdehnung eines eventuell durch eine Undichtigkeit übertretenden Gases verwendet werden. Hierdurch wird eine Vergleichbarkeit zwischen zu verschiedenen Zeitpunkten durchgeführten Verfahren erreicht.

Die Leerlaufspannung einer Brennstoffzelle beträgt etwa 1,15 V. Es hat sich nun in zahlreichen Versuchen herausgestellt, dass ein vorteilhafter vorbestimmter Zellspannungswert, bei oder kurz nach dessen Unterschreitung der Entladewiderstand zugeschaltet wird, zwischen 0,8 und 1,05 V liegt. Ist die Zellspannung auf diesen Wert gefallen, so lässt sich eine Undichtigkeit in einer Elektrolyt-Elektroden-Einheit einer Brennstoffzelle besonders sensibel feststellen.

In einer weiteren vorteilhaften Ausgestaltung der Erfindung ist der Widerstandswert des Entladewiderstands so bemessen, dass die Brennstoffzellen der Brennstoffzellenanordnung nach Zuschalten des Entladewiderstands innerhalb von längstens 20 Sekunden von 1 V auf 100 mV entladen werden. Bei einem Zuschalten des Entladewiderstands bei einer Zellspannung von 1000mV sinkt also die Zellspannung der intakten Brennstoffzellen innerhalb von längstens 20 Sekunden von 1000 mV auf einen Wert von 100 mV. Der quantitative Widerstandswert des Entladewiderstands richtet sich hierbei nach dem von der Brennstoffzellenanordnung erzeugten Strom und somit nach der Anzahl und Größe der Brennstoffzellen in der Brennstoffzellenanordnung. Die Zeit von 20 Sekunden ist so bemessen, dass ein Umpolen einer defekten Brennstoffzelle auch ohne maschinelles Auslesen der Zellüberwachung leicht feststellbar ist. Beträgt die Zeit bis zum Unterschreiten der Zellspannung unter 100 mV wesentlich mehr als 20 Sekunden, so verwischt der Effekt des Umpolens, da der Unterschied der Zellspannungen zwischen einer defekten und einer intakten Brennstoffzelle klein wird.

Zweckmäßigerweise werden die Brennstoffzellen nach Zuschalten des Entladewiderstands innerhalb von 3 bis 10 Sekunden von einer Zellspannung von 1 V auf 50 mV entladen. Eine solche Entladungsgeschwindigkeit hat sich in Versuchen als besonders günstig zum Erkennen eines kleinen Gaslecks erwiesen.

Eine besondere Genauigkeit der Lokalisierung einer defekten Zelle wird erreicht, indem die Zellspannung einer jeden Zelle einzeln überwacht wird.

Alternativ wird die Zellspannung der Brennstoffzellen in Gruppen von höchstens fünf Brennstoffzellen überwacht. Hierdurch verringert sich der Messaufwand gegenüber einer Einzelzellüberwachung erheblich. Die Umpolung einer schadhaften Brennstoffzelle ist so signifikant, dass auch bei dem Zusammenfassen von jeweils maximal fünf Zellspannungen zu einem Messwert ein Umpolen einer Brennstoffzelle und somit ein Undichtigkeitsschaden in der Überwachungsgruppe gerade noch feststellbar ist. Ein vorteilhafter Kompromiss zwischen zuverlässiger und genauer Lokalisierung und Messaufwand wird erreicht, wenn die Zellspannung von jeweils Zweier- oder Dreiergruppen von Brennstoffzellen überwacht wird.

Bei einer maschinellen Erfassung der Zellspannung in vorgegebenen Zeitabständen und ihrer Ausgabe auf ein Anzeigegerät, beispielsweise einen Bildschirm, kann die Zellspannung der Brennstoffzellen der Brennstoffzellenanordnung besonders einfach visuell überwacht werden.

Eine besonders genaue und auch später noch dokumentierbare Überwachung der Zellspannung der Brennstoffzellen wird erreicht, indem die Zellspannung in vorgegebenen Zeitabständen maschinell erfasst und auf einem Datenträger gespeichert wird. Auf diese Weise können auch nur sehr kurzzeitige und schwach ausgeprägte Umpolungen erkannt werden. Außerdem stehen so die Daten für spätere Untersuchungen, beispielsweise zur Langzeitüberwachung einer Brennstoffzellenanordnung, zur Verfügung.

Zweckmäßigerweise wird das Verfahren angewendet auf Brennstoffzellen, die für den Betrieb mit reinem Sauerstoff (O₂) und reinem Wasserstoff (H₂) eingerichtet sind. Bei Brennstoffzellen, die mit reinem Sauerstoff und reinem Wasserstoff betrieben werden, ist die Gefahr eines Abbrands einer oder mehrerer Brennstoffzellen durch eine Undichtigkeit innerhalb der Brennstoffzelle besonders groß. Daher ist die Überwachung von solchen Brennstoffzellen auf kleine Undichtigkeiten besonders vorteilhaft.

Besonders vorteilhaft wird das Verfahren bei PEM-Brennstoffzellen (Proton Exchange Membrane-Brennstoffzellen) angewendet. Diese Zellen sind besonders sensibel gegenüber Abbrand, weshalb das Verfahren seine Vorteile bei solchen Zellen besonders gut ausspielen kann.

Ein Ausführungsbeispiel der Erfindung wird anhand einer Zeichnung erläutert, die fünf Figuren umfasst. Hierbei zeigen
- FIG 1: eine Brennstoffzellenanordnung zur Durchführung des Verfahrens;
- FIG 2: ein Flussdiagramm zum Ablauf des Verfahrens;
- FIG 3: einen Zellspannungsverlauf einer intakten Brennstoffzelle während der Durchführung des Verfahrens;
- FIG 4: einen Zellspannungsverlauf einer defekten Brennstoffzelle während des Ablaufs des Verfahrens;
- FIG 5: Zellspannungen von Brennstoffzellen einer Brennstoffzellenanordnung zu einem Zeitpunkt während der Durchführung des Verfahrens.

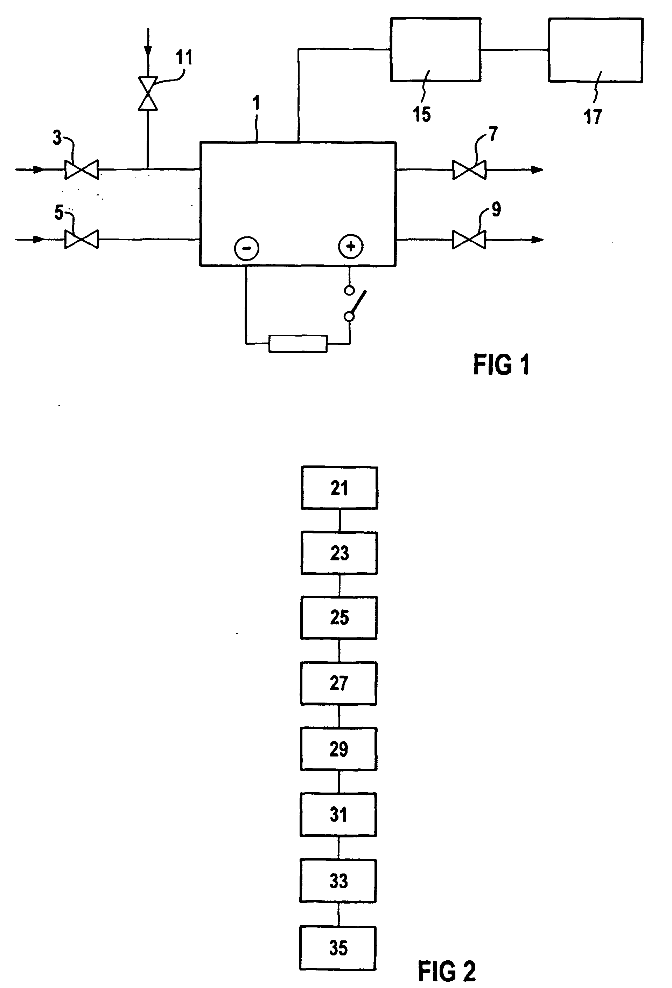

In Figur 1 wird in schematischer Darstellung eine Brennstoffzellenanlage dargestellt, die eine Brennstoffzellenanordnung 1 mit einer Anzahl von Brennstoffzellen umfasst. Die Brennstoffzellen sind planare Brennstoffzellen, die zu einem Brennstoffzellenstapel gestapelt sind. Die Brennstoffzellenanlage umfasst außerdem ein Oxidationsgaseinlassventil 3, ein Brenngaseinlassventil 5, ein Oxidationsgasauslassventil 7, ein Brenngasauslassventil 9 und ein Inertgaseinlassventil 11. Des weiteren umfasst die Brennstoffzellenanlage einen Entladewiderstand 13 sowie eine Brennstoffzellenüberwachungseinrichtung 15 und eine Auswerteeinheit 17 in Form eines Computers mit angeschlossenem Bildschirm. Die Brennstoffzellenanordnung umfasst 260 PEM-Brennstoffzellen, die für den Betrieb mit reinem Sauerstoff (O₂) als Oxidationsgas und reinem Wasserstoff (H₂) als Brenngas eingerichtet sind.

Figur 2 zeigt ein Ablaufdiagramm eines Verfahrens zum Lokalisieren eines Gaslecks innerhalb einer Brennstoffzellenanordnung, bei dem in einem ersten Verfahrensschritt 21 während des regulären Betriebs der Brennstoffzellenanordnung 1 der Anodengasraum der Brennstoffzellen der Brennstoffzellenanordnung 1 mit reinem Wasserstoff und der Kathodengasraum der Brennstoffzellen mit reinem Sauerstoff beaufschlagt wird. In einem nachfolgenden Verfahrensschritt 23 wird die Brennstoffzellenanordnung 1 von einer in den Figuren nicht gezeigten Betriebslast - einem Antrieb eines Fahrzeugs - elektrisch getrennt und in den Leerlaufbetrieb gebracht. Anschließend wird die Betriebsgaszufuhr zu den Gasräumen der Brennstoffzellen der Brennstoffzellenanordnung 1 unterbrochen 25, indem das Oxidationsgaseinlassventil 3 und das Brenngaseinlassventil 5 der Brennstoffzellenanlage geschlossen werden. Das Inertgaseinlassventil 11 der Brennstoffzellenanlage ist zu diesem Zeitpunkt ebenfalls geschlossen. Im anschließenden Verfahrensschritt 27 wird der Gasdruck innerhalb des Anodengasraums der Brennstoffzellen vom Betriebsdruck von 2,3 Bar Wasserstoff auf 1,6 Bar entspannt (jeweils absoluter Druck). Ebenfalls entspannt wird der Gasdruck des im Kathodengasraum befindlichen Sauerstoffs, das von einem Betriebsdruck von 2,6 Bar auf 1,6 Bar gebracht wird. Anschließend wird das Brenngasauslassventil 9 geschlossen, so dass die Anodengasräume der Brennstoffzellen der Brennstoffzellenanordnung 1 hermetisch abgeschlossen sind.

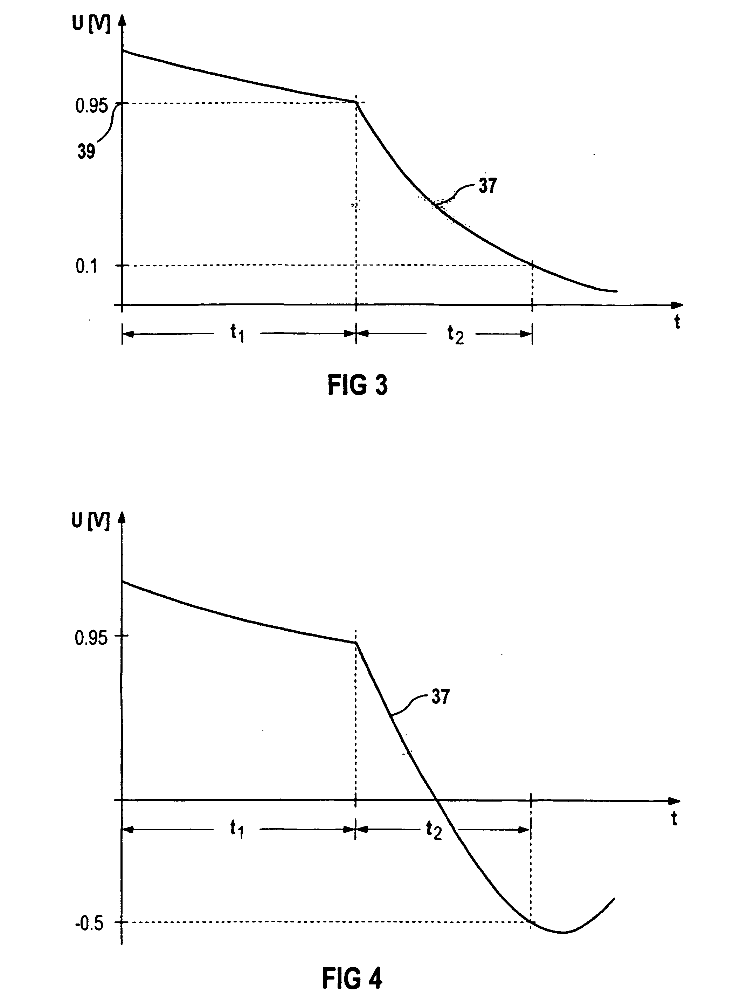

Im nächsten Schritt 29 des Verfahrens wird das Inertgaseinlassventil 11 geöffnet und der Kathodengasraum der Brennstoffzellen mit Stickstoff (N₂) gespült. Hierbei wird der Stickstoff mit einem Druck von 2 Bar in die Kathodengasräume der Brennstoffzellen eingelassen. Nach einer in den Figuren 3 und 4 dargestellten ersten Zeitperiode t₁ wird der Entladewiderstand 13 in elektrischen Kontakt mit den Brennstoffzellen der Brennstoffzellenanordnung 1 gebracht (31). Der Widerstandswert des Entladewiderstands 13 beträgt 10 Ω. Anschließend werden die Zellspannungen 37 der Brennstoffzellen überwacht (33). Nach Anschalten des Entladewiderstands 13 sinkt die Zellspannung 37 der intakten Brennstoffzellen der Brennstoffzellenanordnung 1 innerhalb einer in Figur 3 dargestellten zweiten Zeitspanne t₂ von 950 mV auf etwa 100 mV. Die Zeitspanne t₂ beträgt etwa 7 s. Während der gleichen zweiten Zeitspanne t₂ sinkt die in Figur 4 dargestellte Zellspannung 37 einer defekten Brennstoffzelle, die eine Undichtigkeit in der Elektrolyt-Elektroden-Einheit aufweist, wesentlich schneller ab, als die Zellspannung 37 der intakten Zellen der Brennstoffzellenanordnung 1. Durch den durch die defekte Brennstoffzelle hindurchgetriebenen Strom polt die Zellspannung 37 der defekten Brennstoffzelle um und erreicht nach Ablauf der zweiten Zeitperiode t₂ einen Wert von etwa - 500 mV. Während der Spülung der Kathodengasräume mit Stickstoff und der Entladung der Brennstoffzellen wird die Zellspannung 37 der Brennstoffzellen der Brennstoffzellenanordnung 1 permanent von der Brennstoffzellenüberwachungseinrichtung 15 überwacht. Die Werte der Brennstoffzellenspannungen 37 werden von der Brennstoffzellenüberwachungseinrichtung 15 an die Auswerteeinheit 17 übermittelt, die diese Werte in periodischen Intervallen speichert und außerdem auf einem Bildschirm ausgibt. In einem letzten Verfahrensschritt 35 werden die Gasräume der Brennstoffzellen der Brennstoffzellenanordnung 1 mit Stickstoff geflutet und das bis dahin offene Oxidationsgasauslassventil 7 geschlossen. Nach dem anschließenden Schließen des Inertgaseinlassventils 11 sind somit auch die Kathodengasräume der Brennstoffzellen der Brennstoffzellenanordnung 1 hermetisch gegenüber der Außenwelt verschlossen.

Während der ersten Zeitperiode t₁ sinkt die Zellspannung 37 der intakten Brennstoffzellen der Brennstoffzellenanordnung 1 von der Leerlaufspannung von etwa 1,15 V auf eine zweite Spannung von etwa 0,95. In einer alternativen Form des Verfahrens kann diese zweite Spannung als Triggerspannung 39 für die Zuschaltung des Entladewiderstands 13 zu den Brennstoffzellen der Brennstoffzellenanordnung 1 verwendet werden. Die Ermittlung des zweiten Spannungswerts erfolgt hierbei durch die Messung der gesamten Spannung der Brennstoffzellenanordnung 1 und der Teilung dieses Werts durch die Anzahl der Brennstoffzellen.

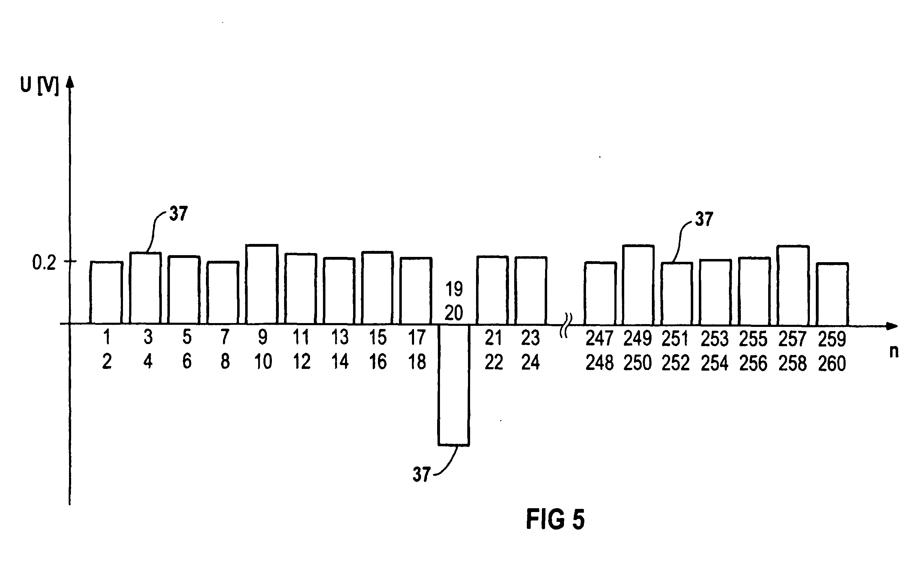

Figur 5 zeigt die von der Auswerteeinheit gespeicherten Daten der Zellspannungen zu einem Zeitpunkt kurz vor Ablauf der zweiten Zeitperiode t₂. Ein Spannungswert setzt sich hierbei aus der Zellspannung 37 von zwei benachbarten Brennstoffzellen zusammen, die jeweils in einem Block dargestellt ist. Die Zellspannung 37 von zwei benachbarten Zellen beträgt bei fast allen Zellen etwa 200 mV; eine einzelne Zelle weist also eine Zellspannung von etwa 100 mV auf. Lediglich die zusammengefasste Zellspannung 37 der beiden Brennstoffzellen 19 und 20 der 260 Brennstoffzellen der Brennstoffzellenanordnung 1 weisen einen stark negativen Spannungswert auf. Aus diesem negativen Spannungswert ist zu ersehen, dass entweder eine der beiden Brennstoffzellen 19 oder 20 eine Undichtigkeit zwischen ihren beiden Gasräumen aufweist oder eventuell sogar beide Brennstoffzellen 19 und 20 schadhaft sind.

## Patentansprüche

1. Verfahren zum Lokalisieren eines Gaslecks innerhalb einer Brennstoffzellenanordnung (1) mit einer Anzahl von Brennstoffzellen, bei dem
a) der Anodengasraum der Brennstoffzellen mit Brenngas und der Kathodengasraum der Brennstoffzellen mit Oxidationsgas beaufschlagt (21) wird,
b) die Betriebsgaszufuhr zu mindestens einem der beiden Gasräume der Brennstoffzellen unterbrochen wird (25),
c) der von der Betriebsgaszufuhr getrennte Gasraum der Brennstoffzellen mit einem Inertgas gespült wird (29)
d) die Brennstoffzellen mit einem Entladewiderstand (13) in elektrischem Kontakt stehen (31),
e) die Zellspannung (37) der Brennstoffzellen überwacht wird.

2. Verfahren nach Anspruch 1, bei dem die Brennstoffzellen vor der Unterbrechung der Betriebsgaszufuhr (25) zu den Brennstoffzellen in den Leerlaufbetrieb gebracht werden (23).

3. Verfahren nach Anspruch 1 oder 2, durchgeführt nach einem regulären Betrieb der Brennstoffzellenanordnung (1), wobei die Beaufschlagung des Anodengasraums mit Brenngas und des Kathodengasraums mit Oxidationsgas während des regulären Betriebs erfolgt.

4. Verfahren nach einem der vorhergehenden Ansprüche, durchgeführt als Abschaltverfahren für die Brennstoffzellenanordnung (1).

5. Verfahren nach Anspruch 4, das mit einem Fluten (33) aller Gasräume der Brennstoffzellen mit einem Inertgas abgeschlossen wird.

6. Verfahren nach einem der vorhergehenden Ansprüche, bei dem als Inertgas Stickstoff (N₂) verwendet wird.

7. Verfahren nach einem der vorhergehenden Ansprüche, bei dem der Gasdruck innerhalb der beiden Gasräume der Brennstoffzellen vor dem Spülen (29) mit einem Inertgas auf einen vorbestimmten Wert gebracht wird (27).

8. Verfahren nach einem der vorhergehenden Ansprüche, bei dem der Inertgasdruck größer als der Druck des Betriebsgases in den ungespülten Gasräumen der Brennstoffzelle ist.

9. Verfahren nach einem der Ansprüche 1 bis 8, bei dem_der Inertgasdruck kleiner als der Druck des Betriebsgases in den ungespülten Gasräumen der Brennstoffzellen ist.

10. Verfahren nach einem der vorhergehenden Ansprüche, bei dem die Kathodengasräume der Brennstoffzellen mit dem Inertgas gespült werden (29).

11. Verfahren nach einem der vorhergehenden Ansprüche, bei dem der von der Betriebsgaszufuhr getrennte Gasraum eine vorbestimmte erste Zeitperiode (t₁) mit dem Inertgas gespült (29) und der Entladewiderstand (13) erst mit Ablauf der ersten Zeitperiode (t₁) zugeschaltet wird.

12. Verfahren nach einem der Ansprüche 1 bis 10, bei dem der Entladewiderstand (13) erst dann zugeschaltet wird (31), wenn die Spannung der Brennstoffzellenanordnung (1) auf einen vorbestimmten Wert (39) gefallen ist.

13. Verfahren nach einem der vorhergehenden Ansprüche, bei dem der Widerstandswert des Entladewiderstands (13) so bemessen ist, dass die Brennstoffzelle nach Zuschalten des Entladewiderstands (13) innerhalb einer zweiten Zeitperiode (t₂), die längstens 20 s beträgt, von 1 V auf 100 mV entladen werden.

14. Verfahren nach einem der vorhergehenden Ansprüche, bei dem die Zellspannung einer jeden Zelle einzeln überwacht wird.

15. Verfahren nach einem der vorhergehenden Ansprüche, bei dem die Zellspannung (37) der Zellen in Gruppen von höchstens fünf Zellen überwacht wird.

16. Verfahren nach einem der vorhergehenden Ansprüche, bei dem die Zellspannung (37) der Zellen auf ein Umpolen hin überwacht wird.

17. Verfahren nach einem der vorhergehenden Ansprüche, bei dem die Zellspannung (35) in vorgegebenen Zeitabständen maschinell erfasst und auf einem Anzeigegerät ausgegeben wird.

18. Verfahren nach einem der vorhergehenden Ansprüche, bei dem die Zellspannung (37) in vorgegebenen Zeitabständen maschinell erfasst und auf einem Datenträger gespeichert wird.

19. Verfahren nach einem der vorhergehenden Ansprüche, angewendet auf Brennstoffzellen, die für den Betrieb mit reinem Sauerstoff (O₂) und mit reinem Wasserstoff (H₂) eingerichtet sind.

20. Verfahren nach einem der vorhergehenden Ansprüche, angewendet auf PEM-Brennstoffzellen.

## Claims

1. Method for localizing a gas leak in a fuel cell system (1) having a number of fuel cells, in which
a) fuel gas is supplied (21) to the anode gas space of the fuel cells and oxidation gas is supplied (21) to the cathode gas space of the fuel cells,
b) the supply of operating gas to at least one of the two gas spaces of the fuel cells is interrupted (25),
c) the gas space of the fuel cells from which the operating gas supply has been disconnected is purged (29) with an inert gas,
d) the fuel cells are in electrical contact (31) with a discharge resistor (13),
e) the cell voltage (37) of the fuel cells is monitored.

2. Method according to Claim 1, in which the fuel cells are switched (23) to no-load mode before the supply of operating gas to the fuel cells is interrupted (25).

3. Method according to Claim 1 or 2, carried out after regular operation of the fuel cell system (1), with fuel gas being supplied to the anode gas space and oxidation gas to the cathode gas space during regular operation.

4. Method according to one of the preceding claims, carried out as a method for switching off the fuel cell system (1).

5. Method according to Claim 4, which is concluded by all the gas spaces of the fuel cells being flooded (33) with an inert gas.

6. Method according to one of the preceding claims, in which the inert gas used is nitrogen (N₂).

7. Method according to one of the preceding claims, in which the gas pressure inside the two gas spaces of the fuel cells is brought to a predetermined level (27) before the step of purging (29) with an inert gas.

8. Method according to one of the preceding claims, in which the inert gas pressure is greater than the pressure of the operating gas in the unpurged gas spaces of the fuel cell.

9. Method according to one of Claims 1 to 8, in which the inert gas pressure is lower than the pressure of the operating gas in the unpurged gas spaces of the fuel cells.

10. Method according to one of the preceding claims, in which the cathode gas spaces of the fuel cells are purged (29) with the inert gas.

11. Method according to one of the preceding claims, in which the gas space which has been disconnected from the supply of operating gas is purged (29) with the inert gas for a predetermined first period of time (t₁), and the discharge resistor (13) is only connected up once the first period of time (t₁) has elapsed.

12. Method according to one of Claims 1 to 10, in which the discharge resistor (13) is only connected up (31) when the voltage of the fuel cell system (1) has dropped to a predetermined value (39).

13. Method according to one of the preceding claims, in which the resistance of the discharge resistor (13) is such that the fuel cell are discharged from 1 V to 100 mV within a second period of time (t₂) of at most 20 s of the discharge resistor (13) being connected up.

14. Method according to one of the preceding claims, in which the cell voltage of each cell is monitored individually.

15. Method according to one of the preceding claims, in which the cell voltage (37) of the cells is monitored in groups of at most five cells.

16. Method according to one of the preceding claims, in which the cell voltage (37) of the cells is monitored for a reversal of polarity.

17. Method according to one of the preceding claims, in which the cell voltage (35) is recorded by machine means at predetermined time intervals and is output on a display unit.

18. Method according to one of the preceding claims, in which the cell voltage (37) is recorded by machine means at predetermined time intervals and is stored on a data carrier.

19. Method according to one of the preceding claims, applied to fuel cells which are designed to operate with pure oxygen (O₂) and with pure hydrogen (H₂).

20. Method according to one of the preceding claims, applied to PEM fuel cells.

## Revendications

1. Procédé de localisation d'une fuite de gaz dans un dispositif
(1) de piles à combustible ayant un certain nombre de piles à combustible, dans lequel
a) on alimente (21) l'espace réservé au gaz à l'anode des piles à combustible en gaz combustible et l'espace réservé au gaz à la cathode des piles à combustible en gaz oxydant,
b) on interrompt (25) l'envoi de gaz de fonctionnement à au moins l'un des deux espaces réservés au gaz des piles à combustible,
c) on balaye (29) par un gaz inerte l'espace réservé au gaz, qui est séparé de l'envoi de gaz de fonctionnement, des piles à combustible,
d) on met (31) les piles à combustible en contact électrique avec une résistance (13) de décharge,
e) on contrôle la tension (37) de pile des piles à combustible.

2. Procédé suivant la revendication 1, dans lequel on met les piles à combustible, avant l'interruption de l'envoi (25) de gaz de fonctionnement aux piles à combustible, en fonctionnement en marche à vide.

3. Procédé suivant la revendication 1 ou 2, effectué après un fonctionnement régulier du dispositif (1) de piles à combustible, dans lequel on effectue l'alimentation de l'espace réservé au gaz à l'anode en gaz combustible et de l'espace réservé au gaz à la cathode en gaz oxydant pendant le fonctionnement régulier.

4. Procédé suivant l'une des revendications précédentes, effectué en tant que procédé d'arrêt du dispositif (1) de piles à combustible.

5. Procédé suivant la revendication 4, qui est terminé par un remplissage (33) de tous les espaces réservés au gaz des piles à combustible par un gaz inerte.

6. Procédé suivant l'une des revendications précédentes, dans lequel on utilise de l'azote (N₂) comme gaz inerte.

7. Procédé suivant l'une des revendications précédentes, d ans lequel on porte (27) la pression des gaz à l'intérieur des deux espaces réservés au gaz des piles à combustible avant le balayage (29) par un gaz inerte à une valeur déterminée à l'avance.

8. Procédé suivant l'une des revendications précédentes, dans lequel la pression du gaz inerte est plus grande que la pression du gaz de fonctionnement dans les espaces réservés au gaz non balayés des piles à combustible.

9. Procédé suivant l'une des revendications 1 à 8, dans lequel la pression du gaz inerte est plus petite que la pression du gaz de fonctionnement dans les espaces réservés au gaz non balayé des piles à combustible.

10. Procédé suivant l'une des revendications précédentes, dans lequel on balaye (29) les espaces réservés au gaz à la cathode des piles à combustible par le gaz inerte.

11. Procédé suivant l'une des revendications précédentes, dans lequel on balaye (29) par le gaz inerte l'espace réservé au gaz et séparé de l'envoi du gaz de fonctionnement pendant un premier laps de temps (t₁) déterminé à l'avance et l'on ne branche la résistance (13) de décharge qu'à l'expiration du premier laps de temps (t₁).

12. Procédé suivant l'une des revendications 1 à 10, dans lequel on ne branche (31) la résistance (13) de décharge que lorsque la tension du dispositif (1) de piles à combustible s'est abaissée à une valeur (39) déterminée à l'avance.

13. Procédé suivant l'une des revendications précédentes, dans lequel la valeur de la résistance (13) de décharge est telle que les piles à combustible sont déchargées de 1 V à 100 mV après branchement de la résistance (13) de décharge en un deuxième laps de temps (t₂) qui est au plus de 20 secondes.

14. Procédé suivant l'une des revendications précédentes, **caractérisé en ce que** l'on contrôle individuellement la tension de pile de chaque pile.

15. Procédé suivant l'une des revendications précédentes, dans lequel on contrôle la tension (37) de pile des piles en groupes d'au plus cinq piles.

16. Procédé suivant l'une des revendications précédentes, dans lequel on contrôle la tension (37) de pile des piles jusqu'à l'inversion de polarité.

17. Procédé suivant l'une des revendications précédentes, dans lequel on relève la tension (35) de pile automatiquement à des intervalles de temps donnés à l'avance et on les envoie à un appareil d'indication.

18. Procédé suivant l'une des revendications précédentes, dans lequel on relève automatiquement la tension (37) de pile à des intervalles de temps donnés à l'avance et on les mémorise sur un support de données.

19. Procédé suivant l'une des revendications précédentes, utilisé sur des piles à combustible qui sont destinées à fonctionner avec de l'oxygène (O₂) pur et avec de l'hydrogène (H₂) pur.

20. Procédé suivant l'une des revendications précédentes, utilisé sur des piles à combustible PEM.
